(19)

Europäisches
Patentamt
European
Patent Office
Office européen
des brevets

(11)    **EP 4 108 086 A1**

(12)                **EUROPEAN PATENT APPLICATION**

(43) Date of publication:
**28.12.2022   Bulletin 2022/52**

(51) International Patent Classification (IPC):
**A01N 63/22** *(2020.01)*      **A01P 1/00** *(2006.01)*

(21) Application number: **21181507.1**

(22) Date of filing: **24.06.2021**

(52) Cooperative Patent Classification (CPC):
**A01N 63/22; A01P 1/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BRAIN Biotech AG**
**64673 Zwingenberg (DE)**

(72) Inventors:
• **BORGMEIER, Claudia Dr.**
**64625 Bensheim (DE)**

• **GERSBACH, Jens-Peter**
**68239 Mannheim (DE)**
• **SCHOLZ, Paul**
**50931 Köln (DE)**

(74) Representative: **Fuchs Patentanwälte Partnerschaft mbB**
**Westhafenplatz 1**
**60327 Frankfurt am Main (DE)**

Remarks:
The complete document including Reference Table(s) and the Sequence Listing(s) can be downloaded from the EPO website

(54)    **MICROBIAL AGENT WITH MORAXELLA SP. INHIBITING ACTIVITY**

(57)    Microbial agents comprising a microbial organism of the *Bacillus subtilis group* are disclosed, which inhibit the growth of a *Moraxella sp.* in the microbiome of the built environment. Also methods and uses of the microbial agents are disclosed.

Figure 3

■ Others   ▨ Moraxella

**Description**

**Field of the Invention**

Microbial agents comprising a microbial organism of the *Bacillus subtilis group* are disclosed, which inhibit the growth of *Moraxella sp.* in the microbiome of the built environment. Also methods and uses of the microbial agents are disclosed.

**Background of the Invention**

Over the last 80 years microbiota of the built environment (BE) have become an ecosystem most intimate to men. Yet the lack of knowledge of this ecosystem is profound, despite its significant impact on humanity.

The bacteria, fungi, and viruses that colonize these environments shape the microbiome, and can fundamentally alter the well-being of humans, including an impact on human health.

For example, within the microbiota of the built environment bacteria have been identified to be associated with negative effects, such as malodor and a number of diseases. An example for a microbial organism being associated with negative effects is *Moraxella sp.*.

*Moraxella sp.,* that colonize for example kitchen cleaning articles, establish a microbiome adapted to this specific habitat niche. They may originate from various sources: human hands (through handling), food materials (during cleaning of dishes and kitchen sink), household areas (house dust, kitchen surfaces) and waste water.

Some *Moraxella sp.* are adapted to this specific habitat niche that they show a high tolerance to detergents, desiccation and UV light irradiation, providing one of the possible reasons why they survive even extensive washing-and-drying cycles on household-articles.

The result may be a health risk, especially in such hygienically sensitive areas as kitchens.

Up to now, no practical solutions exist to reduce or inhibit growth of such microbiota, besides of course antibiotics, which should be reserved for hospital treatments, and treatments with 70% alcohol, which are expensive and not suitable for certain surfaces and applications in everyday life situations.

Thus, new paths need to be explored which allow the selective control of *Moraxella sp.* within microbiomes of the built environment and prevent negative effects of those organisms.

**Detailed Description**

In a first aspect the present invention pertains to a microbial agent comprising at least one microbial organism of the *Bacillus subtilis group* with *Moraxella sp.* inhibiting activity of a ratio of less than 0.025 in a long-term polymer-matrix test.

In a second aspect the present invention pertains to a microbial agent comprising at least one microbial organism of the *Bacillus subtilis group* in a concentration of about $1 * 10^3$ to $1 * 10^9$ CFU/cm$^3$, preferably in a concentration of about $1 * 10^4$ to $1 * 10^8$ CFU/cm$^3$, more preferred in a concentration of about $1 * 10^6$ to $1 * 10^8$ CFU/cm$^3$, in yet further embodiment in a concentration of about $1 \times 10^7$ CFU/cm$^3$.

In a third aspect the present invention pertains to a microbial agent comprising at least one member of the species *Bacillus subtilis (or B. subtilis)* in a concentration of about $1 * 10^3$ to $1 * 10^9$ CFU/cm$^3$, preferably in a concentration of about $1 * 10^4$ to $1 * 10^8$ CFU/cm$^3$, more preferred in a concentration of about $1 * 10^6$ to $1 * 10^8$ CFU/cm$^3$, in yet further embodiment in a concentration of about $1 \times 10^7$ CFU/cm$^3$.

In further aspects the present invention pertains to the uses of said microbial agent and methods for production.

In one embodiment the *Moraxella sp.* inhibiting activity may be used in the therapy or prevention of a disease associated with *Moraxella sp.*. In another embodiment, it may be used for inhibiting and/or reducing malodor originating from *Moraxella sp.* in a microbiome of the built environment on a surface, such as skin, textile or hard surface, such as plastic, glass, wood, ceramic and metal, (plastic: rubber, silicone, PU, Polyamide, Polyurethane, Polyester), cellulose, viscose, textiles, wool and/or cotton. In another aspect the microbial agent may be used to treat medicinal products, such as wound dressings, band-aid®, implants, gut care products, etc.

In yet a further aspect, the present invention pertains to a method for inhibiting the growth of *Moraxella sp.* within a microbiome of the built environment on a surface, by using said microbial agent. In one embodiment this method may be used in the therapy of a disease associated with *Moraxella sp.,* in another embodiment for inhibiting the malodor within a microbiome of the built environment.

The term "microbial organism of the *Bacillus subtilis group"*, as used herein, means a living microorganism which, when administered in adequate amounts, confers an effect on the built environment microbiome beneficial for its occupants. Also the microbial organism of the *Bacillus subtilis group,* as used herein as part of a microbial agent, needs to show the ability to inhibit the growth of *Moraxella sp.* within the built environment.

In one embodiment the microbial agent is able to reduce the growth of *Moraxella sp.* with a ratio of less than 0.025 in a long-term polymer-matrix test and/or to reduce or inhibit malodor, resulting in a "triangle odor bag method ratio" measured by the "triangle odor bag method" of at least 2.

The microbial organism of the *Bacillus subtilis group,* as used herein as part of a microbial agent, needs also to fulfil safety criteria. A microbial organism, as used herein as part of a microbial agent, is herein considered *"to fulfil safety criteria",* if it does not endanger human health, e.g. does not harbour acquired antibiotic resistance genes and does not cause any disease, which can be related to that microbial organism. Such "microbial organisms", according to the present invention, fulfil the requirements of the Qualified Presumption of Safety (QPS) regulation by the European Food Safety Authority (EFSA). Thus, in one embodiment the "microbial organism", as used within this invention, is selected from the QPS-EFSA List (10.2903/j.efsa.2019.5753).

The microbial organism of the present invention belongs to the *Bacillus subtilis group.* The term *"Bacillus subtilis group"* as used herein means a sub-genus of the family *Bacillaceae,* genus Ba*cillus,* comprising the species *Bacillus amyloliquefaciens, Bacillus licheniformis, Bacillus subtilis, Bacillus atrophaeus, Bacillus vallismortis, Bacillus sonorensis* and *Bacillus mojavensis subgroup,* which has *Moraxella sp.* inhibiting activity of a ratio of less than 0.025 in a long-term polymer-matrix test.

One of the microbial organisms of the *Bacillus subtilis group* is *Bacillus subtilis,* known also as the hay bacillus or grass bacillus, a Gram-positive, catalase-positive bacterium, found in soil and the gastrointestinal tract of ruminants and humans. As member of the genus *Bacillus, B. subtilis* is rod-shaped, and can form a tough, protective endospore, allowing it to tolerate extreme environmental conditions. *B. subtilis* has historically been classified as an obligate aerobe organism, though evidence exists that it is a facultative anaerobe. *B. subtilis* is considered the best studied Gram-positive bacterium and a model organism to study bacterial chromosome replication and cell differentiation.

As such the composition may comprise the microbial organism of the *Bacillus subtilis group* in a vegetative form and/or as spores; and in some embodiments at least one further excipient, such as for example a buffer, a salt, a preservative, a deposit aid, a pharmaceutical excipient and/or a carrier.

The ability to prepare spores and vegetative cells is considered routine in the art (Probiotics An-timicrob. Proteins, 2019 Sep; 11(3):731-747).

The microbial organism of the *Bacillus subtilis group* should be present in the microbial agent in effective amounts.

The terms *"effective amount", "effective concentration"* or *"effective dosage"* are defined herein as the amount, concentration or dosage of microbial organism of the *Bacillus subtilis group* within the microbial agent applied to the surfaces of an article of the built environment which is sufficient to show *Moraxella sp.* inhibiting activity with a ratio in the long-term polymer-matrix test of less than 0.025 (see description below).

In another embodiment the *Moraxella sp.* inhibiting activity of the composition is sufficient to significantly inhibit the growth of *Moraxella sp.* on the surfaces of an article of the built environment in order to reduce malodor resulting in a triangle odor bag method ratio (see description below) by a factor of at least 2.

The actual effective dosage in absolute numbers depends on the desired effect, such as for example reduction of malodor; other ingredients present in the composition, and also the articles and/or treated surface in question, such as roughness, hydrophilicity, etc..

In one embodiment the at least one microbial organism of the *Bacillus subtilis group* is present in the microbial agent in a concentration of about $1 \times 10^2$ to $1 \times 10^{10}$ $CFU/cm^3$.

In a further aspect the at least one microbial organism of the *Bacillus subtilis group* in the microbial agent is at least one member of the *Bacillus subtilis group* in a concentration of about $1 * 10^3$ to $1 * 10^9$ $CFU/cm^3$, preferably in a concentration of about $1 * 10^4$ to $1 * 10^8$ $CFU/cm^3$, more preferred in a concentration of about $1 * 10^6$ to $1 * 10^8$ $CFU/cm^3$, in yet further embodiment in a concentration of about $1 \times 10^7$ $CFU/cm^3$.

In a further aspect the at least one microbial organism in the microbial agent is at least one member of the species *Bacillus subtilis (or B. subtilis)* in a concentration of about $1 * 10^3$ to $1 * 10^9$ $CFU/cm^3$, preferably in a concentration of about $1 * 10^4$ to $1 * 10^8$ $CFU/cm^3$, more preferred in a concentration of about $1 * 10^6$ to $1 * 10^8$ $CFU/cm^3$, in yet further embodiment in a concentration of about $1 \times 10^7$ $CFU/cm^3$.

Less than $1 \times 10^2$ $CFU/cm^3$ are not sufficient to show *Moraxella sp.* inhibiting activity with a ratio of less than 0.025 in a long-term polymer-matrix test. More than $1 \times 10^{10}$ $CFU/cm^3$ normally do not result in a commensurable improvement of *Moraxella sp.* inhibiting activity and/or triangle odor bag method ratio.

In yet another embodiment, the concentration of the microbial organism of the *Bacillus subtilis group* is measured on the surface of the article of the built environment. In such a case the surface section comprising the microbial agent is isolated and CFU-capability of the microbial organism of the *Bacillus subtilis group* is measured. The concentration is then represented in $ng$ $gDNA/cm^2$.

Thus, in one embodiment the concentration of the microbial organism of the *Bacillus subtilis group* on the surface of the article of the built environment is at least 1 $ng$ $gDNA / cm^2$, more preferred at least 10 $ng$ $gDNA / cm^2$, even more preferred 25 $ng$ $gDNA / cm^2$, even more preferred 50 $ng$ $gDNA / cm^2$, most preferred 100 $ng$ $gDNA / cm^2$.

In another embodiment the concentration of the microbial organism of the *Bacillus subtilis group* on the surface of the article of the built environment is described in "colony-forming unit" per milliliter, i.e. (CFU)/cm$^3$, preferably at least about 1 * 10$^2$ to 1 * 10$^{10}$ CFU/cm$^3$, preferably about 1 * 10$^4$ to 1 * 10$^8$ CFU/cm$^3$, most preferred of about 1 * 10$^5$ to 1 * 10$^7$ CFU/cm$^3$.

The CFUs of an article comprising the microbial agent may be measured by the following general steps:

1. Incubating 1 cm$^3$ of the article comprising the microbial agent in 10 ml saline buffer; for 5 minutes in a water bath of 80°C;

2. Plating the buffer on ready-to-use Tryptic Soy (TSA) plates (1 ml buffer per plate, 10 plates in total, plate dimensions: 90 mm inner diameter, 15 mm height)

3. Incubating at 37°C for 24h

4. Typing the microbial organism of the *Bacillus subtilis group* per colony with *groEL* sequencing;

5. Counting the number of colonies per microbial organism of the *Bacillus subtilis group* and calculating the specific CFU/cm$^3$ of the article.

Please be referred to example 1 for more details.

In yet another embodiment the microbial agent according to the present invention reduces the fraction of *Moraxella sp.* within the total microbiome of a surface by a factor of at least 10, preferable of at least 50, even more preferred of at least 100, even more preferred of at least 200, most preferred of at least 300 and preferably up to a factor of 400, most preferred even up to a factor of 500, as compared to a microbiome of the untreated surface.

The evaluation of the fraction of *Moraxella sp.* within the total microbiome of a surface is done by metagenome sequencing reads (e.g. by *groEL* sequencing). The average total sequencing readout of the microbiome (covering about 10 different bacterial genera) is set to 100%, the average percentage of Moraxella sp. is then calculated in relation thereto (see experimental section for more details).

The term *"Moraxella sp."* as used herein refers to a genus of Gram-negative bacteria in the *Moraxellaceae* family. It is named after the Swiss ophthalmologist Victor Morax. The organisms are short rods, coccobacilli, or as in the case of *Moraxella catarrhalis,* diplococci in morphology, with asaccharolytic, oxidase-positive, and catalase-positive properties.

The species comprises *M. atlantae, M. boevrei, M. bovis, M. bovoculi, M. canis, M. caprae, M. catarrhalis, M. caviae, M. cuniculi, M. equi, M. lacunata, M. lincolnii, M. nonliquefaciens, M. ob-longa, M. osloensis, M. pluranimalium, M. porci* and *M. saccharolytica.*

*M. catarrhalis* is the clinically most important species under this genus. *M. catarrhalis* usually resides in respiratory tract, but can gain access to the lower respiratory tract in patients with chronic chest disease or compromised host defenses, thus causing tracheobronchitis and pneumonia. For example, it causes a significant proportion of lower respiratory tract infections in elderly patients with COPD and chronic bronchitis. It is also one of the notable causes of otitis media and sinusitis.

*Moraxella lacunata* is one of the causes of blepharoconjunctivitis in human.

*Moraxella bovis* is the cause of infectious bovine keratoconjunctivitis, known colloquially in the United Kingdom as New Forest eye. As a strict aerobe, *M. bovis* is confined to the cornea and conjunctiva, resulting in a progressive, non self-limiting keratitis, ulceration, and - ultimately - rupture of the cornea. The disease is relatively common, infecting cattle only.

*M. osloensis* has been associated with malodor.

*Moraxella sp.* are omnipresent in households and thrive especially well at warm temperatures and alternating conditions between wet and dry states.

**Long-term Polymer-Matrix Test**

The microbial agent according to the present invention comprises at least one microbial organism of the *Bacillus subtilis group* with *Moraxella sp.* inhibiting activity and has a ratio of less than 0.025 in a long-term polymer-matrix test.

The "long-term polymer-matrix test" is defined as a test wherein cubes of 20g of a sponge polymer-material made from soft polyurethane (PUR) foam material (spatial weight 20 kg/m$^3$, having 20 pores cm$^{-1}$ according to the "linear intercept method") are used.

Depending on the sample to be measured, different, although similar, strategies may be applied:

a) For the test of the long-term polymer-matrix test ratio of the **microbial agent** of the present invention, one half of the sponge polymer-matrix cubes is further treated with 10 ml of a solution comprising the microbial agent of the *Bacillus subtilis group* with *Moraxella* sp. inhibiting activity (*"mia sample"*), the other half of the sponge polymer-matrix cubes remains untreated with the microbial agent with *Moraxella sp.* inhibiting activity ("con*trol"*).

b) For the test of the long-term polymer-matrix test ratio of a **microbial organism of the *Bacillus subtilis group*** with *Moraxella sp.* inhibiting activity, one half of the sponge polymer-matrix cubes is further treated with 10 ml of a PBS-solution comprising about $1 * 10^5$ CFU/cm$^3$ of the microbial organism of the *Bacillus subtilis group* with *Moraxella sp.* inhibiting activity (*"mia sample"*), the other half of the sponge polymer-matrix cubes remains untreated with the microbial agent with *Moraxella sp.* inhibiting activity (*"control'*).

c) For the test of the long-term polymer-matrix test ratio of an **agent with unknown *Moraxella sp.* inhibiting activity,** one half of the sponge polymer-matrix cubes is further treated with 10 ml of a solution comprising said agent (*"mia sample"*), the other half of the sponge polymer-matrix cubes remains untreated with the agent of unknown *Moraxella sp.* inhibiting activity (*"control'*).

Then each of the sponge polymer-matrix cubes (sample as well as control) is subjected to 45 wash and dry cycles.
Each wash and dry cycle consists of the following consecutive steps:

a. submerging the sponge polymer-matrix cube for 2 minutes in washing liquid (composition below) at a temperature of 45°C;

b. squeezing the sponge polymer-matrix cube three times while submerged in the washing liquid; wherein the cube is squeezed so far that the volume during squeezing is at least less than 50% of the volume of the material in "relaxed" (i.e. "un-squeezed" condition);

c. squeezing the polymer-matrix cube one time outside the liquid; (squeezing outside the liquid is done until the sponge more than 100%, but less than 150% of the weight as compared to the dry weight of the sponge polymer-matrix cube before it was submerged in washing liquid);

d. placing the sponge polymer-matrix cube on a draining rack at 20°C for 24 hours.

The washing liquid, as mentioned above, consists of 5L water, 3ml Triton® X 100, and 25ml of a standard broth medium comprising:

- Enzymatic Digest of Soybean 3.0 g/L
- Sodium Chloride 5.0 g/L
- Dipotassium Hydrogen Phosphate 2.5 g/L
- Glucose Monohydrate 2.5 g/L
- wherein the standard broth medium is autoclaved before use at 121°C for 15 minutes;
- and is adjusted to a final pH: 7.3 $\pm$ 0.2 at 25°C.

At the end (after the last drying step) of the long term polymer-matrix test, the sponge polymer cubes were directly transferred to homogenization tubes and gDNA preparation was performed as further explained in detail in example 5.
The metagenomics sequencing reads (e.g. by *groEL* sequencing) of the *Moraxella sp.* in the polymer-material are divided by all metagenome reads (e.g. by *groEL* sequencing) from the microbiome sample. The values are given as %.

Formula I:

$$\frac{reads\ (Moraxella\ sp.)}{all\ reads\ of\ microbiome\ sample\ (total)}\ x100 = metagenome\ ratio$$

The metagenome ratio of the polymer-matrix cubes comprising the microbial agent with *Moraxella* sp. inhibiting activity was labeled *"mia sample"*. The metagenome ratio of the polymer-matrix cubes comprising no microbial agent with *Moraxella sp.* inhibiting activity was labeled *"control"* .

The ratio of the long-term polymer-matrix test is then calculated from the metagenome ratio values as follows:

Formula II:

$$\frac{metagenome\ ratio\ (mia\ sample)}{metagenome\ ratio\ (control)} = long\ term\ polymer\ matrix\ test\ ratio$$

An microbial agent and/or microbial organism of the *Bacillus subtilis group* is considered to have *Moraxella sp.* growth inhibiting activity when the ratio of the long-term polymer-matrix test is 0.025 or less (i.e. a 40-fold reduction of metagenomic proportion of *Moraxella sp.* within the total metagenome reads), preferably 0.02 or less (i.e. 50-fold reduction), more preferably 0.015 or less (i.e. 67-fold reduction), more preferably 0.01 or less (i.e. 100-fold reduction), more preferably 0.005 or less (i.e. 200-fold reduction), more preferably 0.0025 or less (i.e. 400-fold reduction), even more preferably 0.001 or less (i.e. 1000-fold reduction). In some embodiments the presence of *Moraxella sp.* is reduced to such an extent that no metagenomics reads can be detected in the sample treated with the microbial agent of the present invention.

**Triangle Odor Bag Method**

In one embodiment the *"Triangle Odor Bag Method"* was adapted to measure the threshold level of malodor and to calculate the "triangle odor bag method ratio".

In one aspect of the present invention a surface treated with the microbial agent according to present invention results in an odor ratio of at least 2, preferably of at least 5, as measured by the Triangle Odor Bag Method.

A study by Ueno et al. (Water Sci Technol. 2009, 59 (7), pp. 1339-42) shows that the "Triangle Odor Bag Method" enables a reproducible determination of the odor threshold. The "Triangle Odor Bag Method" has been adopted for the offensive odor control law in Japan.

For the test a panel of at least six assessors, more preferred 12 assessors, most preferred 24 assessors, whose average threshold for 4-methyl-3-hexenoic acid (4M3H) is within 20 - 80 ppb are selected. Three-liter plastic bags are used for presentation of the diluted odor samples. An amount, e.g. 32g, sample material is put in one bag, in the other bags odorless sample material of the same composition, amount, color and shape is put in order to guarantee double-blind standards.

Both the sample material as well as the control are subjected to the same washing-drying treatment for 45 cycles as described above for the long-term polymer-matrix test.

After the last drying step, sample material as well as the control are presented double-blinded to the assessors.

Assessors sniff and chose the one bag having the odor out of three bags. The presentation is performed in a descending series of amount of sample material, e.g. 32g, 16g, 8g, 4g, 2g and 1g. The exact amounts of the descending series of sample material used in this test depends on individual properties of the sample. The starting amount should still have a clear odor recognizable by all assessors, then the amount is reduced by half until none of the assessors is able to recognize the odor anymore.

The procedure is repeated until the assessors give a wrong answer. The geometric mean of the polymer-matrix material weight of the last correct answer and of the first wrong answer is calculated as the individual threshold.

The "odor threshold weight" is then calculated as the geometric mean of individual thresholds excluding the minimum and maximum individual thresholds.

A ratio is calculated between the odor threshold weight of sample material (sample) and odor threshold weight of the control (control) in order to receive a "triangle odor bag method ratio":

$$\frac{odor\ threshold\ weight\ (sample)[g]}{odor\ threshold\ weight\ (control)[g]} = triangle\ odor\ bag\ method\ ratio$$

A "triangle odor bag method ratio" of above 1 shows a reduction of odor in the sample as compared to the control.

In case of samples which were pre-treated with the microbial agent the "triangle odor bag method ratio" is at least 2, i.e. the odor threshold weight is double as high as the control. In further embodiments the "triangle odor bag method ratio" is at least 3, even more preferred at least 4, most preferred at least 5 or more.

In yet another embodiment the at least one microbial organism of the *Bacillus subtilis group* within the microbial agent is heat resistant, so that is survives a heat test. This feature is beneficial, since also *Moraxella sp.* is reported to be heat resistant, and, thus, the *Moraxella sp.* inhibiting effect of the microbial agent can even take place after the household article and/or surface comprising the microbial agent was submitted to some kind of heat treatment.

The "heat test" as defined herein comprises applying 10 ml of a solution comprising the microbial organism of the *Bacillus subtilis group* with 100 CFU/cm$^3$ in PBS-Buffer on a heat resistant surface, which is then subjected consecutive to the following four heating steps:

    1. continuous dry heating for about 30 min. at 62°C;

    2. flash dry heating for about 20 sec. at 70 - 74°C;

    3. dry superheating for 3 - 5 sec. at 85 - 87°C; and

    4. dry ultra-high temperature (UHT) for 1 - 3 sec. at 130 - 150°C.

A microbial organism of the *Bacillus subtilis group* (or spores or other vegetative cell states thereof) is considered to be "resistant within a heat test" if after performing all four steps of the heat test with said organism at least one CFU/cm$^3$ can be determined by plating on TSA-standard-plates and incubation at 37°C for 24h as described for the CFU-determination in example 1.

The microbial organism of the *Bacillus subtilis group* of the present invention also survives 5 minutes heat treatment in a 700-Watt-microwave, 10 minutes in a 20% chlorine bleach solution and/or a treatment of at least one washing program in a dish-washer.

The term "microbiome of the built environment", as used herein, means the communities of microorganisms, their genetic information and the specific environmental niches (biotic/abiotic factors) found in human constructed environments (i.e., the built environment). It is also sometimes referred to as "microbiology of the built environment".

This encompasses any kind of microorganism (e.g. bacteria, archaea, viruses, various microbial eukaryotes including yeasts, and others sometimes generally referred to as protists) which can be found in air, in water, and any surface of the built environment such as buildings, furniture, articles, vehicles, and water systems.

The microbiome may be present on a surface and/or in indoor air.

In case of an air-treatment, in one embodiment the microbial agent is applied directly to the air in form of an aerosol or the like with a suitable dispenser. In another embodiment air filters are treated with the microbial agent in order to both inhibit the growth of *Moraxella sp.* in the air as well as within the filter itself.

Surfaces of the built environment include surfaces such as soft surfaces (such as for example fabrics), or hard surfaces (such as for example plastic, glass, wood, metal, stone or ceramic); and combinations thereof. In one embodiment any surface which can be found on a household article.

The microbiomes of the built environment impact the health of humans and other organisms occupying the built environment, but also have an effect on non-health properties such as malodor.

In one embodiment the microbiome of the built environment comprises *Moraxella sp.* before being treated with the microbial agent. In one embodiment the microbiome of the built environment does not comprise *Moraxella sp.* when being treated with the microbial agent. In some embodiments both the microbial agent as well as *Moraxella sp.* are applied at the same time to the microbiome of the built environment.

The microbiome may form a biofilm which is a syntrophic consortium of microorganisms in which cells stick to each other and often also to a surface. These adherent cells become embedded within a slimy extracellular matrix that is composed of extracellular polymeric substances (EPS). The cells within the biofilm produce the EPS components, which are typically a polymeric conglomeration of extracellular polysaccharides, proteins, lipids and DNA.

Biofilms may form on living or non-living surfaces and can be prevalent in natural, industrial, and hospital settings. The microbial cells growing in a biofilm are physiologically distinct from planktonic cells of the same organism, which, by contrast, are single-cells that may float or swim in a liquid medium.

Microbes form a biofilm in response to various different factors, which may include cellular recognition of specific or non-specific attachment sites on a surface, nutritional cues, or in some cases, by exposure of planktonic cells to sub-inhibitory concentrations of antibiotics. A cell that switches to the biofilm mode of growth undergoes a phenotypic shift in behavior in which large suites of genes are differentially regulated.

As becomes apparent from the description, the microbial agents of the present invention is applied to any microbiome of the build environment, which may comprise *Moraxella sp.*.

In some embodiments the microbial agents of the present invention is applied to a surface of the built environment, soft surfaces (such as for example fabrics), or hard surfaces (such as for example plastic, glass, wood, metal, stone or ceramic); and combinations thereof. In one embodiment any surface which can be found on a household article is encompassed.

Thus, the present invention generally relates to a method for degrading malodors generated by *Moraxella sp.* preferably with regard to the treatment of biologic surfaces (for example skin, hair, nails, gastro-intestinal surfaces, conjunctiva, etc.), soft surfaces (such as for example fabrics), or hard surfaces (such as for example plastic, glass, wood, metal, stone or ceramic). More particularly it relates to the degradation of malodors generated by *Moraxella sp.* by the reduction of the abundance of *Moraxella sp.* in a microbiome in the context of household articles, such as household articles including fabrics, kitchen articles, and the like.

As "household article" as used herein, any household article is encompassed which is a material object and/or item in the home. It includes temporary or permanent machinery and appliances. They are the tangible and movable personal property placed in the living rooms, dining rooms, kitchens, family rooms, great rooms, bedrooms, bathrooms, recreation rooms, hallways, attics, and basements and other rooms of a house.

The "household article" according to the present invention preferably encompasses also cleaning articles for cosmetic use, such as make-up sponges, make-up cleaning pads (cosmetic pads), cotton swabs, etc.

As "kitchen article" as used herein, any article is encompassed which is a small hand held tool used for food preparation.

Common kitchen tasks include cutting food items to size, heating food on an open fire or on a stove, baking, grinding, mixing, blending, and measuring; different articles are made for each task. A general purpose article such as a chefs knife may be used for a variety of foods; other kitchen articles are highly specialized and may be used only in connection with preparation of a particular type of food, such as an egg separator or an apple corer. Some specialized articles are used when an operation is to be repeated many times, or when the cook has limited dexterity or mobility.

A subgroup of "kitchen articles" are "cooking articles", which are an article specifically used for cooking. Articles may be categorized by use with terms derived from the word "ware": kitchen-ware, wares for the kitchen; ovenware and bakeware, kitchen articles that are for use inside ovens and for baking; cookware, merchandise used for cooking; and so forth.

Another subgroup of "kitchen articles" are "eating articles", which are tools used for eating (including any tableware). Cutlery (i.e. knives, forks and spoons) can be used for both food preparation in a kitchen and as eating articles when dining.

Another subgroup of "kitchen articles" are "kitchen cleaning articles", thus, any article used for cleaning surfaces in the kitchen, such as sponges, dish clothes, brushes, scourer and the like.

The term "fabrics" encompasses all kind of fabrics, textiles, fibers, clothes garments, sponges, polymeric matrices (for example PU or cellulose) and fabrics used on, e.g., furniture and cars.

The term "laundry" refers to already used and/or stained/soiled clothes in need of washing, and is in contrast to newly manufactured fabrics. Washing of newly manufactured fabrics is mainly done in the textile industry. The fabric or laundry may be made from any suitable material.

In some embodiments the fabrics and/or laundry are made from cellulosic materials, synthetic materials and/or man-made fibers, or blends thereof.

Examples of contemplated cellulosic materials include cotton, viscose, rayon, ramie, linen, lyocell (e.g ., TENCEL™ , produced by Courtaulds Fibers), or blends thereof, or blends of any of these fibers together with synthetic or man-made fibers (e.g. , polyester, polyamid, nylon) or other natural fibers such as wool and silk. , such as viscose/cotton blends, lyocell/cotton blends, viscose/wool blends, lyocell/wool blends, cotton/wool blends; flax (linen), ramie and other fabrics and/or laundry based on cellulose fibers, including all blends of cellulosic fibers with other fibers such as wool, polyamide, acrylic and polyester fibers, e.g ., viscose/cotton/polyester blends, wool/cotton/polyester blends, flax/cotton blends etc. The fabric and/or laundry may also be a synthetic materials, e.g., consisting of essentially 100% polyester, polyamid, nylon, respectively. The term "wool," means any commercially useful animal hair product, for example, wool from sheep, camel, rabbit, goat, llama, and known as merino wool, Shetland wool, cashmere wool, alpaca wool, mohair etc. and includes wool fibers and animal hair.

The method of the invention can be used on wool or animal hair material in the form of top, fiber, yarn, or woven or knitted fabrics.

An aspect of the present invention also includes cleaning compositions or compositions for household applications, for example in cleaning machines or cleaning processes, which compositions comprise the microbial organism of the *Bacillus subtilis group* described herein and a carrier.

The composition may be in the form of a solid, semi-solid, gel, liquid, aerosol, aqueous solution, emulsion, granules, and/or powder.

The compositions may comprise blends of microbial organisms of two or more of strains of the of the *Bacillus subtilis group* described herein. Optionally, a blend may comprise two or more species and/or two or more isolates. The isolates may include at least two, at least three or more isolates of spores or other vegetative cell state of the microbial organism of the *Bacillus subtilis group.*

The compositions of the present invention may in an embodiment have a pH in the range of 5-10 and may further include water, one or more buffers and/or one or more preservatives.

It is one of the surprising finding of the present invention that the microbial organisms of the Ba*cillus subtilis group* within the microbial agent can survive a large number of preservation compositions.

For preservation of the microbial agent of the present invention the following preservatives can be useful: chloromethylisothiazolinone/methylisothiazolinone (CMIT/MIT) (kathon or others); MIT (neolone or others); 1,2-benzisothiazolin-3-one (BIT) (if allowed in personal care); CMIT/MIT + EDTA; CMIT/MIT + chelator; MIT + EDTA; MIT + Chelator; BIT and EDTA; BIT and a chelator; bronopol; 2-phenoxyethanol; 2- phenoxyethanol and a chelator; potassium sorbate (used at low pH); sodium benzoate (used at low pH); salt; glycerol; propylene glycol; essential oils; dichlorobenzyl alcohol; triclosan; parabens; and 1-phenoxy-2-propanol and 2-phenoxy-1 - propanol. In an embodiment, the preservative is 2-phenoxyethanol; 2-phenoxyethanol and a chelator; potassium sorbate (used at low pH); sodium benzoate (used at low pH); Salt; glycerol; propylene glycol; or one of more essential oils - e.g., white mustard seed, tea tree, rosewood, or some citrus oils.

In another embodiment, the preservative is 2- phenoxyethanol; 2-phenoxyethanol and a chelator; or glycerol. Accordingly, an embodiment of the present invention is directed to a microbial agent as described herein and a preservative selected from the group consisting of chlorome-thylisothiazolinone/ methylisothiazolinone (CMIT/MIT) (kathon or others); MIT (neolone or others); 1,2-benzisothiazolin-3-one (BIT) (if allowed in personal care); CMIT/MIT and EDTA; CMIT/MIT and a chelator; MIT and EDTA; MIT and a chelator; BIT and EDTA; BIT and a chelator; bronopol; 2-phenoxyethanol; 2-phenoxyethanol and a chelator; potassium sorbate (used at low pH); sodium benzoate (used at low pH); salt; glycerol; propylene glycol; essential oils; dichlorobenzyl alcohol; triclosan; parabens; and 1-phenoxy-2-propanol and 2-phenoxy-1-propanol.

In an embodiment, the preservative is 2-phenoxyethanol; 2-phenoxyethanol and a chelator; potassium sorbate (used at low pH); sodium benzoate (used at low pH); salt; glycerol; propylene glycol; or one of more essential oils - e.g., white mustard seed, tea tree, rosewood, or some citrus oils, 2-phenoxyethanol; 2-phenoxyethanol and a chelator; or glycerol, and wherein the composition is a liquid, solid or gel composition.

In one aspect, the composition according to the invention is adapted for application to the interior of a cleaning machine (e.g. laundry washing machine or dish washing machine).

In another embodiment, the composition is adapted for delivery to a polymer-matrix by applications which include, but are not limited to, solid, semi-solid, gel, liquid, aerosol, emulsion, and/or powder applications. This composition may be used alone and/or in combination any other additive.

In another aspect, the composition according to the invention is adapted for application to a household article, kitchen article such as a cleaning articles, or sanitary article for example as part of liquid dish-soap or in a composition which allows the pre-treatment of the kitchen article during production.

A composition of the invention may be in solid or liquid form. The composition may be a concentrate to be diluted, rehydrated and/or dissolved in a solvent, including water, before use.

The composition may also be a ready-to-use (in-use) composition. The composition may furthermore be an active cleaning base ingredient to be incorporated into other cleaning or washing compositions.

In one embodiment, the composition is adapted for delivery to a washing machine to prevent *Moraxella sp.* containing microbiomes capable of causing laundry malodor.

The composition further comprises a "deposit aid", which facilitates the deposition to the microbiome of the built environment during a washing process, such as a laundry process, dish-washer process, or hand washing process. Such a deposit aid may be any excipient which improves the application of the microbial agent to the target microbiome of the built environment, for example an emulsifier, a surfactant, a stabilizer, an adhesion aid, or the like.

The microbial agent may be a washing agent, such as a dish-washing agent. Such a microbial washing agent can be present as powdered or tablet solids, homogeneous solutions, or suspensions. It can in principle contain all known ingredients that are usual in such agents.

The microbial agent according to the present invention can contain, in particular, builder substances, surface-active surfactants, peroxygen compounds, water-miscible organic solvents, enzymes, sequestering agents, electrolytes, pH regulators, and further adjuvants such as silver corrosion inhibitors, foam regulators, additional peroxygen activators, and coloring agents and fragrances.

Microbial agents according to the present invention provided for use in automatic dishwashing methods are preferably so-called "3 in 1" products that combine the conventional cleaner, rinse agent, and regenerating-salt agents in one microbial agent.

Suitable in principle as water-soluble builder components, in particular in the low-alkalinity cleaning agents, are all builders usually used in automatic dishwashing agents, for example polymeric alkali phosphates, which can be present in the form of their alkaline, neutral, or acid sodium or potassium salts.

Examples thereof are tetrasodium diphosphate, disodium dihydrogen diphosphate, pentasodium triphosphate, so-called sodium hexametaphosphate, and the corresponding potassium salts, or mixtures of sodium and potassium salts.

Their quantities can be in the range of up to approximately 35 wt-%, based on the entire agent; preferably, however, the microbial agents according to the present invention are free of such phosphates.

Further possible water-soluble builder components are, for example, organic polymers or natural or synthetic origin, chiefly polycarboxylates, which act as co-builders especially in hard-water regions.

Possibilities are, for example, polyacrylic acids and copolymers of maleic acid anhydride and acrylic acid, as well as the sodium salts of said polymeric acids. Commercially usual products are, for example, Sokalan® CP 5 and PA 30 of the BASF company. Among the polymers of natural origin usable as co-builders are, for example, oxidized starch and polyamino acids such as polyglutamic acid or polyaspartic acid.

Further possible builder components are naturally occurring hydroxycarboxylic acids such as, for example, mono-, dihydroxysuccinic acid, ohydroxypropionic acid, and gluconic acid. Among the preferred builder components are the salts of citric acid, in particular sodium citrate.

Possibilities as sodium citrate are anhydrous trisodium citrate and, by preference, trisodium citrate dihydrate. Trisodium citrate dihydrate can be used as a finely or coarsely crystalline powder.

Depending on the pH ultimately established in the microbial agents according to the present invention, the acids corresponding to the aforesaid co-builder salts can also be present.

Suitable oxygen-based bleaching agents are principally alkali perborate mono- or tetrahydrate and/or alkali percarbonate, sodium being the preferred alkali metal. The use of sodium percarbonate has advantages especially in cleaning agents for tableware, since it has particularly favorable effects on corrosion properties on glassware.

The oxygen-based bleaching agent is therefore by preference an alkali percarbonate, in particular sodium percarbonate.

Additionally or, in particular, alternatively, known peroxycarboxylic acids, for example dodeca-nediperacid or phthalimidopercarboxylic acids, which if applicable can be substituted on the aromatic portion, can be contained.

The addition of small quantities of known bleaching-agent stabilizers such as, for example, phosphonates, borates or metaborates, and metasilicates, as well as magnesium salts such as magnesium sulfate, may furthermore be expedient. Because cleaning agents are usually utilized in an air atmosphere, the microbial agents according to the present invention can also be free of bleaching agents, since the bleach catalysts already exhibit an effect in the presence of atmospheric oxygen.

Transition-metal salts or complexes known as bleach-activating active substances, and/or conventional bleach activators, i.e. compounds that, under perhydrolysis conditions, yield optionally substituted perbenzoic acid and/or peroxycarboxylic acids having 1 to 10 carbon atoms, in particular 2 to 4 carbon atoms, can be used; the presence of peroxygen-based bleaching agent is then necessary, however.

The usual bleach activators cited above, which carry O-and/or N-acyl groups having the aforesaid number of carbon atoms, and/or which carry optionally substituted benzoyl groups, are suitable.

Multiply acylated alkylenediamines, in particular tetraacetylethylendiamine (TAED), acylated glycolurils, in particular tetraacetyl glycoluril (TAGU), acylated triazine derivatives, in particular 1,5-diacetyl-2,4-dioxohexahydro-1 ,3,5-triazine (DADHT), acylated phenylsulfonates, in particular nonanoyl- or isononanoyloxybenzenesulfonate, acylated polyvalent alcohols, in particular triacetin, ethylene glycol diacetate, 2,5-diacetoxy-2,5-dihydrofuran, as well as acetylated sorbitol and mannitol, and acylated sugar derivatives, in particular pentaacetyl glucose (PAG), pentaacetyl fructose, tetraacetyl xylose, and octaacetyl lactose, as well as acetylated , optionally N-alkylated glucamine and gluconolactone, are preferred.

Combinations of conventional bleach activators can also be used.

Automatic dishwashing microbial agents according to the present invention preferably contain the usual alkali carriers such as, for example, alkali silicates, alkali carbonates, and/or alkali hydrogencarbonates.

Included among the alkali carriers usually used are carbonates, hydrogencarbonates, and alkali silicates having a SiC / IV O molar ratio (M=alkali atom) from 1.5: 1 to 2.5: 1.

Alkali silicates can be contained in quantities of up to 30 wt-% based on the entire microbial agent. It is preferable to dispense entirely with the use of the highly alkaline metasilicates as alkali carriers.

The alkali carrier system preferably used in the microbial agent according to the present invention is a mixture of carbonate and hydrogencarbonate, by preference sodium carbonate and hydrogencarbonate, which is contained in a quantity of up to 60 wt-%, by preference 10 wt-% to 40 wt-%.

The ratio of carbonate used to hydrogencarbonate used varies depending on the pH that is ultimately desired, although an excess of sodium hydrogencarbonate is usually used, so that the weight ratio between hydrogencarbonate and carbonate is generally 1:1 to 15:1.

In a further preferred embodiment of microbial agent according to the present invention, 20 wt-% to 40 wt-% water-soluble organic builders, in particular alkali citrate, 5 wt-% to 15 wt-% alkali carbonate, and 20 wt-% to 40 wt-% alkali di-silicate are contained.

The microbial agent according to the present invention can also, if applicable, have surfactants added to them, in particular low-foaming nonionic surfactants that provide better detachment of grease-containing stains and serve as a wetting agent and, if applicable, as a granulating adjuvant in the context of manufacture of the microbial cleaning agent.

Their quantity can be up to 10 wt-%, in particular up to 5 wt-%, and is preferably in the range from 0.5 wt-% to 3 wt-%. Extremely low-foaming compounds are usually used, especially in microbial cleaning agents for use in automatic dishwashing processes.

These compounds include, by preference, C12-C18 alkylpolyethylene glycolpolypropylene glycol ethers having respectively up to 8 mol of ethylene oxide and propylene oxide units in the molecule. It is also possible, however, to use other known low-foaming nonionic surfactants such as, for example, C12-C18 alkylpolyethylene glycol-polybutylene glycol ethers having respectively up to 8 mol of ethylene oxide and butylene oxide units in the molecule, endcapped alkylpolyalkylene glycol mixed ethers, and the foaming but environmentally attractive C8-C14 alkyl polyglucosides having a degree of polymerization from approximately 1 to 4 (e.g. APG® 225 and APG® 600), and/or C12-C14 alkylpolyethylene glycols having 3 to 8 ethylene oxide units in the molecule.

Likewise suitable are surfactants from the family of the glucamides such as, for example, alkyl-N-methylglucamides, in which the alkyl part preferably derives from a fatty alcohol having a carbon chain length of C6 to C14.

It is in some cases advantageous if the above described surfactants are used as mixtures, for example the combination of alkyl polyglycoside with fatty alcohol ethoxylates, or glucamide with alkyl polyglycosides.

Preferred silver corrosion protection agents are organic disulfides, divalent phenols, trivalent phenols, optionally substituted benzotriazole, salts and/or complexes of manganese, titanium, zirconium, hafnium, vanadium, cobalt, or cerium, in which the aforesaid metals are present in one of the oxidations states II, III, IV, V, or VI.

In addition, the microbial agent according to the present invention can contain enzymes such as proteases, amylases, pullulases, cutinases, and lipases, for example proteases such as BLAP®, Optimase®, Opticlean®, Maxacal®, Maxapem®, Esperase®, and/or Savinase®, amylases such as Termamyl®, Amylase-LT®, Maxamyl®, and/or Duramyl®, lipases such as Lipolase®, Lipomax®, Lumafast®, and/or Lipozym®.

The enzymes that are used if applicable can be adsorbed onto carrier substances and/or embedded into encasing substances in order to protect them from premature inactivation.

They are contained in the microbial cleaning agent according to the present invention in quantities by preference not above 2 wt-%, in particular from 0.1 wt-% to 0.7 wt-%.

If the microbial cleaning agents foam excessively upon use, they can also have added to them up to 6 wt-%, by preference approximately 0.5 wt-% to 4 wt-%, of a foam-suppressing compound, by preference from the group of the silicone oils, mixtures of silicone oil and hydrophobized silicic acid, paraffins, paraffin-alcohol combinations, hydrophobized silicic acid, the bis-fatty acid amides, and other known defoamers obtainable commercially.

Further optional ingredients in the microbial agent according to the present invention are, for example, perfume oils.

Among the organic solvents usable in the microbial agent according to the present invention, especially when the latter are present in liquid or paste form, are alcohols having 1 to 4 carbon atoms, in particular methanol, ethanol, isopropanol, and tert.-butanol, diols having 2 to 4 carbon atoms, in particular ethylene glycol and propylene glycol, as well as mixtures thereof, and the ethers derivable from the aforesaid compound classes.

Water-miscible solvents of this kind are present in the cleaning agents according to the present invention at preferably no more than 20 wt-%, in particular from 1 wt-% to 15 wt-%.

In order to establish a desired pH that does not of itself result from the mixture of the other components, the microbial agent according to the present invention can contain system-compatible and environmentally compatible acids, for example citric acid, acetic acid , tartaric acid, malic acid, lactic acid, glycolic acid , succinic acid, glutaric acid, and/or adipic acid , but also mineral acids, in particular sulfuric acid, or alkali hydrogensulfates or bases, in particular ammonium hydroxides or alkali hydroxides pH regulators of this kind are contained in the microbial agent according to the present invention by preference at no more than 10 wt-%, in particular from 0.5 wt-% to 6 wt-%.

Manufacture of the solid microbial agent according to the present invention presents no difficulties and can in principle be effected in known fashion, for example by spray drying or granulation, the peroxygen compound and bleach catalyst optionally being separately added later.

If applicable, the bleach catalyst is mixed with further raw materials and/or compounds, and the mixture is then compressed into tablets or phases thereof.

The cleaning microbial agent according to the present invention in the form of aqueous solutions or those containing other usual solvents is manufactured particularly advantageously by simply mixing the ingredients, which can be placed, in substance or as a solution, into an automatic mixer.

The microbial agent according to the present invention are present by preference as powdered, granular, or tablet preparations that can be manufactured in known fashion, for example by mixing, granulating, roller compacting, and/or by spray drying of the thermally insensitive components and mixing in the more-sensitive components, included among which are, in particular, enzymes, bleaching agents, and the bleach catalyst.

For the manufacture of the microbial cleaning agent according to the present invention in tablet form, it is preferable to proceed in such a way that all the constituents, or all the constituents provided for use together in one phase of the tablet, are mixed together in a mixer, and the mixture, or the mixtures in succession, are compressed by means of conventional tablet presses, for example eccentric presses or rotary tablet presses, at compression pressures in the range from 200 x $10^5$ Pa to 1500 x $10^5$ Pa.

Break-resistant tablets that are nevertheless sufficiently rapidly soluble under the utilization conditions, having flexural strength values normally above 150 N, are thereby obtained without difficulty.

A tablet manufactured in this fashion preferably has a weight from 15g to 40g, in particular from 20g to 30g. It can be round, for example with a diameter from 35 mm to 40 mm, or can have any other desired shape, for example rectangular with optionally rounded edges.

Microbial agents according to the present invention in the form of non-dusting, shelf-stable, pourable powders and/or granulates having high bulk densities in the range from 800 to 1000g/l can be manufactured by mixing the builder components with at least a portion of liquid mixture components in a first partial step of the method, with an increase in the bulk density of this premixture, and then, if desired after intervening drying, combining the further constituents of the agent, among them the microbial agent, with the premixture thus obtained.

Microbial agents according to the present invention for cleaning tableware can be used in both household and commercial dishwashers. They are added manually or by means of suitable metering devices.

The utilization concentration in the cleaning bath is as a rule approximately 1 to 8g/l, by preference 2 to 5g/l.

An automatic washing cycle is generally supplemented and completed by several intermediate rinse cycles with clean water following the cleaning cycle, and a rinse cycle with an ordinary rinse agent. When a microbial agent according to the present invention is used, tableware that is completely clean and unobjectionable in hygienic terms is obtained after drying.

The microbial agent may also be used to reduce or inhibit *Moraxella Sp.* in a microbiome in a therapeutic context.

In particular *M. catarrhalis* residing in the respiratory tract, and/or the lower respiratory tract in patients with chronic chest disease or compromised host defenses, may be treated with the microbial agent of the present invention, either alone or in combination with other therapeutic active substances, such as antibiotics. Thus, also otitis media, sinusitis, COPD, chronic bronchitis, tracheobronchitis and/or pneumonia caused by *M. catarrhalis,* may be treated with the microbial agent of the present invention, either alone or in combination with other therapeutic active substances, such as antibiotics.

In another embodiment blepharoconjunctivitis in human *caused* by *Moraxella lacunata* may be treated with the microbial agent of the present invention, either alone or in combination with other therapeutic active substances, such as antibiotics.

In another embodiment bovine keratoconjunctivitis *caused* by *Moraxella bovis* may be treated with the microbial agent of the present invention, either alone or in combination with other therapeutic active substances, such as antibiotics.

It is obvious for the skilled person, how to comprise the microbial agent in a pharmaceutical composition adjusted to the specific therapeutic application, for example as eye drops, lung lavage, body soap, shampoo, suppository, skin cream and/or dermal patch.

The term "surface roughness" as used herein is a component of surface texture. It is quantified by the deviations in the direction of the normal vector of a real surface from its ideal form. If these deviations are large, the surface is rough; if they are small, the surface is smooth. In surface metrology, roughness is typically considered to be the high-frequency, short-wavelength component of a measured surface. When dealing with the roughness profile, $R_a$ is referred to as defined in DIN EN ISO 4287:2010-07.In some embodiments the microbial agent is applied to or disposed on a surface having a surface roughness of at least 1 $\mu$m Ra. In other embodiments a surface roughness of at least 2 $\mu$m Ra, a surface roughness of at least 3 $\mu$m Ra, a surface roughness of at least 5 $\mu$m Ra, a surface roughness of at least 10 $\mu$m Ra or more.

The term "water contact angle" quantifies the wettability of a solid surface by a liquid via the Young equation. The water contact angle can be measured according to DIN 55660-2:2011-12, chapter 5.2.2. using a static method with a drop volume of 2 $\mu$l.

In some embodiments the microbial agent is applied to or disposed on a surface that has a minimum hydrophilicity defined by a water contact angle of less than 80°. In other embodiments a water contact angle of less than 60°, a water contact angle of less than 45°, a water contact angle of less than 30°, a water contact angle of less than 15° or less. In one embodiment the water contact angle is 0° and the surface is considered hydrophilic.

## Short Description of the Figures

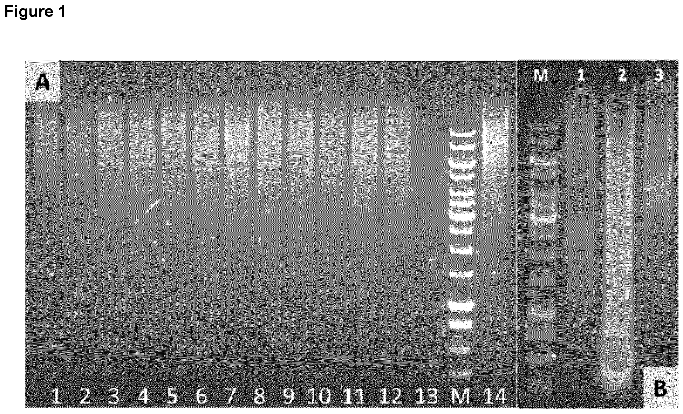

Figure 1 - An agarose gel electrophoretic analysis of gDNA extraction samples is shown. A1-12 are representative samples of harvested sponges after 6 weeks life cycle; A13 is a sample of an untreated sponge; A14 is a sample of a sponge from a household kitchen use; B1 is a sample inoculated with microbial organism of the *Bacillus subtilis*

group (vegetative cell culture sample); B2 is a sample inoculated with microbial organism of the *Bacillus subtilis group* (spore sample); B3 is a sample inoculated with microbial organism of the *Bacillus subtilis group* spores in sponge matrix sample; M is a "gene ruler" with a 1kb ladder.

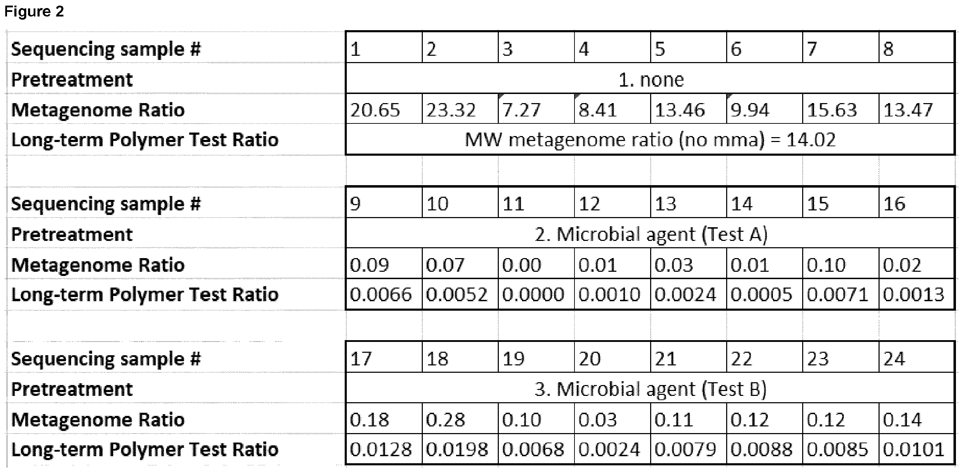

Figure 2 - Metagenome ratio values and long-term polymer matrix test ratio values of sequencing samples (see Formula I and II) based on phylogenetic allocation of sequencing reads generated from sponge samples after undergoing the long-term polymer matrix test. Each sequencing sample represents a gDNA pool from 3 identically treated sponges.

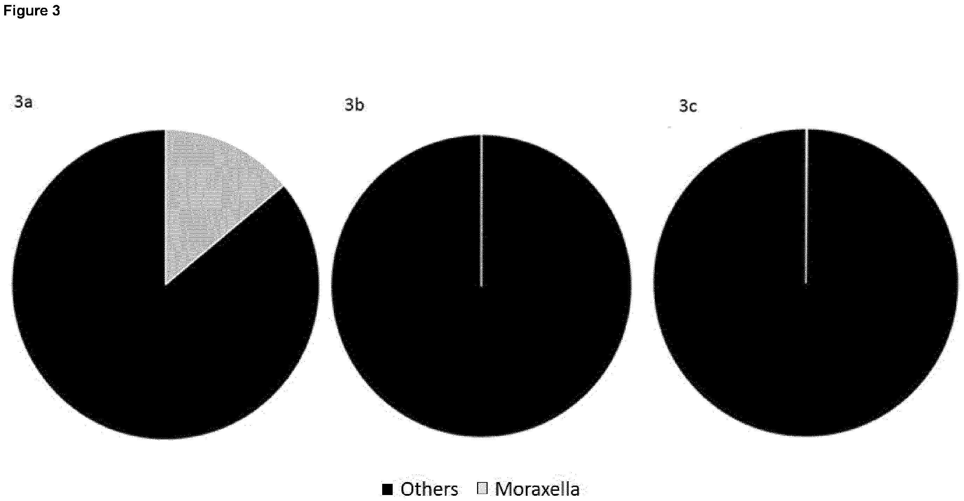

Figure 3 - Comparison of the average phylogenetic allocation of 8 samples not treated and/or treated with the inventive microbial agent.

Figure 3a: Comparison of the average phylogenetic allocation of 8 samples not treated with the inventive microbial agent. The metagenome sequencing reads were generated from sponges after undergoing the long-term polymer matrix test. The average total sequencing readout of the microbiome (about 10 different bacterial genera) was set to 100%, the average percentage of *Moraxella sp.* within that microbiome was about 14% (13.94%).

Figure 3b: Comparison of the average phylogenetic allocation of 8 samples treated with the inventive microbial agent (group A). The metagenome sequencing reads were generated from sponges after undergoing the long-term polymer matrix test. The average total sequencing readout of the microbiome (about 10 different bacterial genera) was set to 100%, the average percentage of *Moraxella sp.* within that microbiome was about 0.03% (0.031 %). Thus, the *Moraxella sp.* within the microbiome was reduced by a factor of about 470.

Figure 3c: Comparison of the average phylogenetic allocation of 8 samples treated with the inventive microbial agent (group B). The metagenome sequencing reads were generated from sponges after undergoing the long-term polymer matrix test. The average total sequencing readout of the microbiome (about 10 different bacterial genera) was set to 100%, the average percentage of *Moraxella sp.* within that microbiome was about 0.14% (0.135%). Thus, the *Moraxella sp.* within the microbiome was reduced by a factor of about 100.

## Examples

### Example 1: CFU determination from surfaces and air samples

Microbial organisms of the *Bacillus subtilis group* are sampled from the surface of the article of the built environment by washing 9 $cm^2$ of the surface of the article with 10 ml PBS-buffer.

The collected buffer solution is heat treated in a water bath at 80°C for 5 minutes.

The buffer solution is then plated on ready-to-use monitoring contact plates, TSA with LTH-Thio cont.-ICR+ (Merck-Millipore, USA).

Alternatively, microbial organisms of the *Bacillus subtilis group* are sampled from indoor air using air monitoring cassettes (37MM 3PC, 0.2$\mu$m PC, Zefon International, USA). Filters incubated for 24h are subsequently washed in 10 ml PBS-buffer and processed as above.

After incubation of the closed contact plates for 24h at 37°C, colonies are counted and harvested for identification with sterile 10$\mu$l inoculating loops (Neolab Migge GmbH, Germany) and resuspended in 20$\mu$l B-Per reagent (Fischer-Scientific, USA).

After incubation for 15min at 37°C, 30$\mu$l MilliQ water are added and 1$\mu$l of the mixture applied in a colony PCR targeting the *groEL* locus (Biosci Biotechnol Biochem.; 1992 Dec;56(12):1995-2002; doi: 10.1271/bbb.56.1995) as follows:

- 7.5$\mu$L Phusion Flash Mastermix (FischerScientific, Germany)

- 1$\mu$L Primer 60-A, 10 pmol/$\mu$l (5'-ACCCTGGGCCCGAGGGCCGCAACGTCGT) (Seq ID. No. 1)

- 1$\mu$L Primer 160-B, 10 pmol/$\mu$l (5'-TGACCGCGACGCCGCCCGCCAGCTTCGC) (Seq ID. No. 2)

- 4.5$\mu$L MilliQ-Wasser

- 1$\mu$L B-Per mixture

The following PCR-protocol was used:

| PCR-Cycles | |
|---|---|
| • 94°C | • 01:00 |
| • -----30 cycles of----- | |
| • 94°C | • 00:10 |
| • 55°C | • 00:20 |
| • 72°C | • 00:20 |
| • --------------------- | |
| • 72°C | • 01:00 |
| • 10°C | • hold |

The 1.1kb PCR product is subsequently sequenced for strain identification.

**Example 2: Preparation of a nutrient-mastermix**

A mastermix of nutrient and microbial organism sources typical for kitchen/household usage ("feed") was established for inclusion in each washing step. The raw materials and respective amounts are summarized in Tab. 1. One big homogenous mastermix was established by adding all materials to a blender. At this point, household dust collected with a hand held vacuum cleaner in the kitchen/living room of 8 different households was added as additional source. The feed mastermix was subsequently homogenized, aliquoted (15ml) and stored at -80°C until the day of use. The bread crumps mixture (1:1 of regular and Panko crumbs) was also established as one batch (stored in an airtight container at room temperature) which was used throughout the life cycle.

**Table 1: Composition and preparation of a feed mastermix for a sponge life cycle experiment.**

| source | amount / cleaning | amount 50d | preparation |
|---|---|---|---|
| Starchy cooking liquid | 5ml | 250ml | 1.5 kg noodles (in 0.5 kg batches) boiled in same pot, water refilled as necessary |
| Frying oil / meat juice / residues | 5ml + residues | 12 Steaks | fried in cooking oil (refill as necessary), steaks removed, pan deglazed with water (ca 50ml), complete content applied for feed |
| Frying oil / meat juice / residues | 5ml + residues | 12 Sausages | fried in cooking oil (refill as necessary), sausages removed, pan deglazed with water (ca 50ml), complete content applied for feed |
| Milk (3.5%) | 4ml | 200ml | as is |
| Yoghurt (1.5%) | 5g | 250g | as is |
| Camembert | 1g | 50g | as is |
| Potato washing water | | 100ml | 100ml water used for washing 10 potatos by hand |
| Ketchup | 2g | 100g | as is |
| Mayonnaise | 2g | 100g | as is |
| Nutella | 2g | 100g | as is |
| Noodle sauce | 5ml | | instant mushroom sauce (for 250ml product) dissolved in noodle cooking water |
| White wine vinegar | 2g | 100g | as is |

(continued)

| source | amount / cleaning | amount 50d | preparation |
|---|---|---|---|
| Glycerol | | 225ml | targeting 15% final concentration |
| **Sum volume for 100 aliquots a 15ml** | | **1500ml** | |
| **Bread crumbs** | not included in frozen feed stock | | Pre-mix (1:1) of regular and Panko crumbs, 10ml portioned and rubbed in bare hands |

**Example 3: Long-term test with polymer-matrices**

Sponge treatment groups 1-3 each consisted of 24 non-inoculated (1) or pre-inoculated sponges (2, strain A; 3, strain B). Each group encompassed two sponge types (12 sponges each), made from polyurethane (PU) and cellulose (CE), respectively. After 4 weeks of Life Cycle, each group of 12 identical (material, inoculum) sponges was further divided into 6 sponges continuing the original polymer-matrix test routine A (group "A") and 6 sponges were switched from routine A to a modified polymer-matrix test routine B (group "AB"). Test groups are summarized in Tab. 2.

Test sponges were devoid of silver chloride finishing and any finishing present on new sponges was washed out prior to the start of the polymer-matrix test. Microbial inoculum was injected with syringes one day prior to the start of the polymer-matrix test and all sponges were completely dry before entering the polymer-matrix test schedule. Furthermore original size sponges were cut in half and each half served as one individual test sponge.

## Table 2: Overview of the sponge treatment groups

| Sequencing sample # | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|
| Probiotic Inoculum | 1. none | | | | | | | | 2. inoculated (strain A) | | | | | | | | 3. inoculated (strain B) | | | | | | | |
| Sponge Treatment Group | 1A | 1A | 1AB | 1AB | 1A | 1A | 1AB | 1AB | 2A | 2A | 2AB | 2AB | 2A | 2A | 2AB | 2AB | 3A | 3A | 3AB | 3AB | 3A | 3A | 3AB | 3AB |
| Life Cycle Routine (w, weeks, type A/B) | 6w A | | 4w A 2w B | | 6w A | | 4w A 2w B | | 6w A | | 4w A 2w B | | 6w A | | 4w A 2w B | | 6w A | | 4w A 2w B | | 6w A | | 4w A 2w B | |
| Sponge material | PU | PU | PU | PU | CE | CE | CE | CE | PU | PU | PU | PU | CE | CE | CE | CE | PU | PU | PU | PU | CE | CE | CE | CE |

The polymer-matrix test schedule (routine A, see Tab. 3) consisted of alternating washing steps (once daily Monday to Friday) and washing pauses (Saturday & Sunday). It was continued for 45 days. After 4 weeks, all sponge groups were split into two sub-groups "A" and "AB", one of which was continued on routine A, the other was treated differently on day 32 and day 39 (routine B). On these days, washing liquid was not squeezed out from the sponges but they were placed back into their storage container dripping wet. Each of the 3 treatment groups had their dedicated storage contained with mesh wire as well as their dedicated metal bowl for washing.

### Table 3: Sponge life cycle schedule

| | Mo | Tue | Wed | Thu | Fri | Sat | Sun |
|---|---|---|---|---|---|---|---|
| **routine A** | 1x cleaning & squeezing | 1x cleaning & squeezing | 1x cleaning & squeezing | 1x cleaning & squeezing | 1x cleaning & squeezing | pause | pause |
| **routine B** | 1x cleaning & squeezing | 1x cleaning & squeezing | 1x cleaning & squeezing | 1x cleaning & squeezing | 1x cleaning w/o squeezing | pause | pause |

Each washing step started by setting up the washing liquid comprising (for each treatment group) 5L of 45 °C tap water, 3ml Pril Kraft Gel Ultra Plus/Sensitive AloeVera, a 15ml feed mastermix aliquot (freshly thawed) and 10ml bread crumbs. The washing liquid for each group was prepared with bare hands, including bread crumbs being rubbed in both hands and subsequently washing them off in fresh washing liquid.

All subsequent handling steps involving sponges were performed with gloved hands only. All sponges belonging to one of the treatment groups were submerged in washing liquid in their group specific washing bowl, squeezed 2 times in the liquid and once outside the liquid before being placed back into their group specific storage container. Treatment sponges were stored in separate, open (room atmosphere, daylight) containers, with no contact between individual sponges and sitting on mesh wire allowing dripping of excess liquid. Sponges were assessed with respect to their smell on a weekly basis. Washing bowls were cleaned after use by applying a per-acetic acid based disinfectant and rinsing with water. Additionally, bowls were sterilized once weekly using dry heat.

**Example 4: VDA odor Test**

Sponges were evaluated using an odor test which was performed essentially as described in the standard procedure VDA 270 (*"Bestimmung des Geruchsverhaltens von Werkstoffen der Kraftfahrzeug-Innenausstattung"*).

The odor test is performed at temperatures of 23°C +- 2°C. At least 24 hours before the test the dried sponges are kept at the same temperature in closed glass jars.

The procedure may be summarized as follows:

- Whole sponges are placed in 250ml clean glass jars with odorless sealing and screw cap
- Odor test is performed by at least 3 subjects (non-smoker, use of perfume or scented hand lotion precluded on that day) within one week; the same samples are tested by all subjects
- at least 3 reference samples are included in the test to assure that smelling capability of subjects are not restricted and to enable comparison between different odor tests.

The at least 3 subjects then grade the samples with grades from 1 to 6 (1 being the best), wherein the following grading principle is applied:

- Grade 1: smell not recognizable
- Grade 2: recognizable smell, but non-disturbing
- Grade 3: clearly recognizable smell, but still non-disturbing
- Grade 4: disturbing smell
- Grade 5: strong disturbing smell
- Grade 6: unbearable smell

A sample passes the VDA-odor test when the arithmetic median of the grades given to the sample by the at least 3 subjects shows a grading of 3 or better (i.e. between grade 1 and 3).

**Example 5: Metagenome Analysis**

After 45 days of Life Cycle (1 day after the last washing step), all sponges were harvested by cutting them in half and stored at -80°C until further use. For gDNA preparation, aliquots of the sponges were removed by scalpel and directly transferred to homogenization tubes (which allow subsequent mechanical lysis of cells in the FastPrepTM device). Cutting was performed in such a way as to obtain a representative sample of all parts of the sponge (soft/hard outer side, interior part).

Several aliquots from each harvested sponge were combined in one gDNA preparation (using FastPrepTM Soil Kit).

Three gDNA preparations representing 3 sponges (between 300-800 mg sponge in total) of the same group were pooled to obtain one sequencing sample. Size distribution of gDNA preparation was estimated via agarose gel electrophoresis.

1$\mu$g of the prepared sponge DNA was used as the input material for the Nanopore library preparation. Library preparation was performed using an edited version of Ligation Sequencing Kit (LSK_109) and the final library was loaded and sequenced using a R9.4 Minion Flow-Cell. Basecalling of the generated reds was performed using Guppy and quality scores and read lengths were analyzed using NanoPlot.

Furthermore, the capability of extracting gDNA also from spores was confirmed likewise. Additional gDNA preparations were obtained using the washing liquid squeezed out from one sponge per group during the final washing step. For this sample type, some groups could not be included in sequencing due to gDNA loss in preparation. The 30 resulting sequencing samples (see Tab. 4 were subsequently applied for Oxford Nanopore sequencing (2 flow cells)).

Based on Blast search performed with the obtained reads, the phylogenetic composition was established. Phylogenetic allocation of reads in each sample (in % of total reads) and metagenome ratios for representatives of *Moraxella spec.* are summarized in Fig. 2.

**Table 4: Overview of gDNA yields from different sponge groups and samples.**

| sequencing sample # | number of individual sponges included in gDNA Pool | Sponge Treatment Group | sponge material | mg dry material prepped | µg gDNA yield | ng gDNA/mg sponge |
|---|---|---|---|---|---|---|
| 1 | 3 | 1A | PU | 425.2 | 2.66 | 6.26 |
| 2 | 3 | 1A | PU | 565.9 | 3.78 | 6.68 |
| 3 | 3 | 1AB | PU | 537 | 9.94 | 18.51 |
| 4 | 3 | 1AB | PU | 563.9 | 9.52 | 16.88 |
| 5 | 3 | 1A | CE | 689.2 | 5.04 | 7.31 |
| 6 | 3 | 1A | CE | 810.2 | 5.18 | 6.39 |
| 7 | 3 | 1AB | CE | 667.5 | 6.72 | 10.07 |
| 8 | 3 | 1AB | CE | 682.7 | 7.84 | 11.49 |
| 9 | 3 | 2A | PU | 400.3 | 5.18 | 12.94 |
| 10 | 3 | 2A | PU | 479.8 | 6.58 | 13.71 |
| 11 | 3 | 2AB | PU | 453.6 | 11.2 | 24.69 |
| 12 | 3 | 2AB | PU | 395.9 | 9.8 | 24.75 |
| 13 | 3 | 2A | CE | 657.1 | 13.02 | 19.81 |
| 14 | 3 | 2A | CE | 684.1 | 11.2 | 16.37 |
| 15 | 3 | 2AB | CE | 609.2 | 14.42 | 23.67 |
| 16 | 3 | 2AB | CE | 587.6 | 13.02 | 22.16 |
| 17 | 3 | 3A | PU | 335 | 3.22 | 9.61 |
| 18 | 3 | 3A | PU | 431.4 | 3.36 | 7.79 |
| 19 | 3 | 3AB | PU | 527.9 | 10.08 | 19.09 |
| 20 | 3 | 3AB | PU | 496.2 | 12.18 | 24.55 |
| 21 | 3 | 3A | CE | 623.4 | 8.96 | 14.37 |
| 22 | 3 | 3A | CE | 710.7 | 9.66 | 13.59 |
| 23 | 3 | 3AB | CE | 675.1 | 11.2 | 16.59 |
| 24 | 3 | 3AB | CE | 748.2 | 11.9 | 15.90 |
| 25 | 1A, 1AB CE Pool | | CE | | 6.03 | |
| 26 | 1A, 1AB, PU Pool | | PU | | 7.29 | |
| 27 | 2A, 2AB CE Pool | | CE | | 8.46 | |
| 28 | 2AB, PU | | PU | | 5.67 | |
| 29 | 3A CE | | CE | | 3.24 | |
| 30 | 3A, 3AB PU Pool | | PU | | 8.1 | |

**Claims**

1.  Microbial agent comprising at least at least one microbial organism from the *Bacillus subtilis group* with *Moraxella sp.* inhibiting activity of a ratio of less than 0.025 in a long-term polymer-matrix test.

2.  The microbial agent according to claim 1, wherein the microbial agent is

    a. applied to or disposed on a microbiome of a surface of the built environment and/or indoor air;
    b. applied to or disposed on a microbiome of a surface that is susceptible to having biofilms,
    c. applied to or disposed on a microbiome of a surface having a surface roughness of at least 1 $\mu$m $R_a$;
    d. applied to or disposed on a surface that has a minimum hydrophilicity defined by a water contact angle of less than 80°C;

e. applied to or disposed on a surface that is selected from the group consisting of biologic, soft or hard surface, and/or

f. applied to or disposed on a surface that comprises less than $10^2$ CFU of *Moraxella sp.* per square centimeter,

g. applied to or disposed on a surface by inoculation and or injection.

3. The microbial agent according to any of claims 1 or 2, wherein the *Moraxella sp.* inhibiting activity of the composition of a ratio of less than 0.01 in a long-term polymer-matrix test.

4. The microbial agent according to claim 2, wherein the microbiome of a surface is present on a biologic, soft or hard surface, such polymer, ceramic, wood, stone, glass, and combinations thereof.

5. The microbial agent according to claim 1, wherein the at least one microbial organism of the *Bacillus subtilis group* fulfils QPS safety criteria.

6. The microbial agent according to any of claims 1 or 5, wherein the at least one microbial organism of the *Bacillus subtilis group* is resistant to a heat test.

7. The microbial agent according to any of the previous claims, wherein the microbial organism of the *Bacillus subtilis group* is in a spore or vegetative cell state.

8. The microbial agent according to any of the previous claims, wherein the at least one microbial organism of the *Bacillus subtilis group* is present in the microbial agent in a concentration of about $1 * 10^6$ to $1 * 10^8$ CFU/cm$^3$.

9. The microbial agent according to any of the previous claims, wherein the microbial agent further comprises a deposit aid, which facilitates the deposition to the microbiome of the built environment during a washing process, such as a laundry process, dish-washer process, or hand washing process.

10. The microbial agent according to any of claims 1, 5 to 7, wherein the at least one microbial organism of the *Bacillus subtilis group* is selected from the group consisting of *Bacillus amyloliquefaciens, Bacillus tequilensis, Bacillus subtilis, Bacillus atrophaeus, Bacillus vallismortis, Bacillus mojavensis* and combinations thereof.

11. The microbial agent according to any of the previous claims, wherein the microbial agent reduces the fraction of *Moraxella sp.* within the total microbiome of a surface by a factor of at least 40.

12. The microbial agent according to any of claims 1 to 11, wherein the triangle odor bag method ratio of the microbial agent is 2 or more.

13. Use of a microbial agent of any of claims 1 to 12 comprising at least one microbial organism of the *Bacillus subtilis group* for inhibiting the growth of *Moraxella sp.* within a microbiome.

14. Method for inhibiting the growth of *Moraxella sp.* within a microbiome of indoor air and/or a surface of the built environment, wherein the microbial agent of any of claims 1 to 13 is deposited to the microbiome of the built environment, and wherein the deposition is made before, during or after the microbiome of the built environment comprises *Moraxella sp.*.

**Figure 1**

Figure 2

| Sequencing sample # | 1 | 2 | 3 | 4 | 5 | 6 | 7 | 8 |
|---|---|---|---|---|---|---|---|---|
| Pretreatment | 1. none | | | | | | | |
| Metagenome Ratio | 20.65 | 23.32 | 7.27 | 8.41 | 13.46 | 9.94 | 15.63 | 13.47 |
| Long-term Polymer Test Ratio | MW metagenome ratio (no mma) = 14.02 | | | | | | | |

| Sequencing sample # | 9 | 10 | 11 | 12 | 13 | 14 | 15 | 16 |
|---|---|---|---|---|---|---|---|---|
| Pretreatment | 2. Microbial agent (Test A) | | | | | | | |
| Metagenome Ratio | 0.09 | 0.07 | 0.00 | 0.01 | 0.03 | 0.01 | 0.10 | 0.02 |
| Long-term Polymer Test Ratio | 0.0066 | 0.0052 | 0.0000 | 0.0010 | 0.0024 | 0.0005 | 0.0071 | 0.0013 |

| Sequencing sample # | 17 | 18 | 19 | 20 | 21 | 22 | 23 | 24 |
|---|---|---|---|---|---|---|---|---|
| Pretreatment | 3. Microbial agent (Test B) | | | | | | | |
| Metagenome Ratio | 0.18 | 0.28 | 0.10 | 0.03 | 0.11 | 0.12 | 0.12 | 0.14 |
| Long-term Polymer Test Ratio | 0.0128 | 0.0198 | 0.0068 | 0.0024 | 0.0079 | 0.0088 | 0.0085 | 0.0101 |

Figure 3

Europäisches
Patentamt

European
Patent Office

Office européen
des brevets

# EUROPEAN SEARCH REPORT

Application Number

EP 21 18 1507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2017/157781 A1 (HENKEL AG & CO KGAA [DE]) 21 September 2017 (2017-09-21) * the whole document * | 1-14 | INV. A01N63/22 A01P1/00 |
| Y | WO 2019/130207 A1 (V MANE FILS JAPAN LTD [JP]) 4 July 2019 (2019-07-04) * the whole document * | 1-14 | |
| Y | CAULIER SIMON ET AL: "Overview of the Antimicrobial Compounds Produced by Members of the Bacillus subtilis Group", FRONTIERS IN MICROBIOLOGY, vol. 10, 16 February 2019 (2019-02-16), pages 1-19, XP055854139, DOI: 10.3389/fmicb.2019.00302 Retrieved from the Internet: URL:https://www.ncbi.nlm.nih.gov/pmc/articles/PMC6401651/pdf/fmicb-10-00302.pdf> * the whole document * | 1-14 | |
| A | WO 2015/091967 A1 (BASF SE [DE]; CRC FOR POLYMERS [AU]) 25 June 2015 (2015-06-25) | 1-14 | **TECHNICAL FIELDS SEARCHED (IPC)** A01N A01P |

The present search report has been drawn up for all claims

| Place of search | Date of completion of the search | Examiner |
|---|---|---|
| Munich | 15 November 2021 | Bertrand, Franck |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 18 1507

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2021

| Patent document cited in search report | Publication date | Patent family member(s) | Publication date |
|---|---|---|---|
| WO 2017157781 A1 | 21-09-2017 | NONE | |
| WO 2019130207 A1 | 04-07-2019 | JP 2019116692 A<br>WO 2019130207 A1 | 18-07-2019<br>04-07-2019 |
| WO 2015091967 A1 | 25-06-2015 | AU 2014368417 A1<br>CA 2933607 A1<br>EP 3082416 A1<br>US 2016316759 A1<br>WO 2015091967 A1 | 06-04-2017<br>25-06-2015<br>26-10-2016<br>03-11-2016<br>25-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Probiotics An-timicrob. *Proteins,* September 2019, vol. 11 (3), 731-747
- **UENO et al.** *Water Sci Technol.,* 2009, vol. 59 (7), 1339-42
- *Biosci Biotechnol Biochem.,* December 1992, vol. 56 (12), 1995-2002